# EUROPEAN PATENT APPLICATION

(11) **EP 3 934 059 A1**
(43) Date of publication of application: **05.01.2022**
(21) Application number: 20183109.6
(22) Date of filing: 30.06.2020
(51) Int. Cl.: H02K 1/14, H02K 7/18, H02K 15/00, H02K 21/22, H02K 3/18, H02K 3/52, H02K 15/02, H02K 15/06, H02K 3/487

(54) **ELECTRICAL MACHINE HAVING A SEGMENTED STATOR OR ROTOR**

(71) Applicant: Siemens Gamesa Renewable Energy A/S, 7330 Brande (DK)
(72) Inventor: Demissie, Edom, Sheffield, S3 7XB (GB); Azar, Ziad, Sheffield, South Yorkshire S10 4ED (GB); Duke, Alexander, Sheffield, S10 5SN (GB)
(74) Representative: Aspacher, Karl-Georg

(57) **Abstract**

A stator (11) or rotor for an electrical machine (10) including a plurality of segments (100), the plurality of segments (100) being circumferentially joined at their ends (23) in such a way that a segment circumferential gap (110) is interposed between two circumferentially adjacent segments (100), the stator (11) or rotor including at least one spacing element (120, 141) provided between two circumferentially adjacent segments (100) for preventing the coil windings (30) of two circumferentially adjacent segments (100) from contacting each other.

## Description

### Field of invention

The present invention relates to an electrical machine having a stator or a rotor with a segmented geometry, i.e. a stator or a rotor including a plurality of stator segments having respective coil windings and being circumferentially joined.

### Art Background

In large electrical machines, segmentation of the stator and/or the rotor structure is required to ease manufacturing and transportation. This is particularly required for stators or rotors where a coil winding is provided. Due to manufacturing tolerances and limitations, tolerance circumferential gaps are typically designed between segments.

For electrical machines with half teeth at the circumferential ends of the segments (typically integral slot electrical machines with distributed windings), it is ensured that the conductors and insulation system of the coil winding are protected both during transportation as well as during operation. This is particularly pertinent when the full generator undergoes thermal cycles which may then cause adjacent circumferential segments to come into contact and would otherwise cause damage to the coil winding.

For electrical machines where a half slot is present at each circumferential end of a segment (typically fractional slot machines with concentrated windings), the side coils are exposed at the end of each segment and therefore they could be damaged, in particular during operation where thermal expansion of segments induces rubbing between adjacent coils. Additionally, the current and flux passing through the end coils could lead to a force pulling away from the tooth, therefore increasing the chance that two end coils from two circumferentially adjacent segments coming into contact.

### Summary of the invention

Scope of the present invention is to control the shape and dimensions of the circumferential gaps in segmented stators or rotors having half slots at the circumferential ends of the segments, in order to minimize the detrimental effects above described.

This scope is met by the subject matter according to the independent claims. Advantageous embodiments of the present invention are described by the dependent claims.

According to the invention, it is provided a stator or rotor for an electrical machine including a plurality of segments. Each segment includes:
- a segment body circumferentially extending about a longitudinal axis of the segment between two circumferential ends, the segment body including:
   - a plurality of teeth protruding according to a radial direction orthogonal to the longitudinal axis from a yoke of the segment body,
   - a plurality of slots, circumferentially interposed between the teeth, the plurality of slots being circumferentially distributed between two end slots, each end slot being circumferentially comprised between a respective tooth and a respective circumferential end, the plurality of slots comprising a plurality of intermediate slots circumferentially comprised between the two end slots,
- each segment further including a coil winding arranged in the segment body, the coil winding including at least two side coil portions respectively housed in the end slots,
- wherein at least two segments of the plurality of segments are circumferentially joined together at their ends in such a way that a segment circumferential gap is interposed between two circumferentially adjacent segments and wherein the stator or rotor includes at least one spacing element provided between two circumferentially adjacent segments for preventing the coil windings of two circumferentially adjacent segments from contacting each other.

The above described segment may be advantageously integrated in a segmented stator or rotor of an electrical machine, either generator or motor. For example, the above described segment may be advantageously integrated in the stator or rotor of an electrical generator for a wind turbine.

According to the present invention, the side coils are protected from damages, which may occur particularly during operation, by preventing them from contacting each other at the circumferential gap.

According to embodiments of the invention, the segment circumferential gap includes a first portion interposed between two circumferentially adjacent side coils and a second portion interposed between two circumferentially adjacent yokes, the first portion having a larger circumferential extension than the second portion. In these embodiments a variable segment circumferential gap design is provided, where the circumferential gap between the yokes is smaller than the gap between the end coils. The first portion of the circumferential gap is to be decided based on the thermal deformation coefficient of the side coils, i.e. the minimum value of such first portion should be larger than the sum of maximum thermal deformation of the neighboring end coils. This implies that any contact between coils is avoided during any operation condition including the extremes.

According to embodiments of the invention, a variable circumferential gap is achieved by providing the yoke, at least at one respective circumferential end, with a protrusion circumferentially protruding with respect to the side coil portion housed in the end slot at the respective circumferential end. The yoke protrusion provides the spacing element between two circumferentially adjacent segments for preventing the coil windings of two circumferentially adjacent segments from contacting each other.

According to embodiments of the invention, the contact between the side coils is avoided by providing an end wedge for radially closing two adjacent end slots of two circumferentially adjacent segments, the end wedge being circumferentially dimensioned for preventing the coil windings of two circumferentially adjacent segments from contacting each other. The end wedge provides the spacing element between two circumferentially adjacent segments.
In particular, the stator or rotor may comprise a plurality of wedges, each wedge being attached at two tooth radial ends of two circumferentially adjacent teeth for radially closing a respective slot, the plurality of wedges comprising at least one intermediate wedge for radially closing a respective intermediate slot and at least one end wedge for radially closing two adjacent end slots, the circumferential extension of the intermediate wedge being smaller than the circumferential extension of the end wedge.

According to embodiments of the invention, a separator may be provided at the segment circumferential gap, the separator being interposed between two respective side coil portions. The separator may be made of paper or of a flexible material, such as rubber or silicon. The flexible material provides a spring effect.

Further improvement is possible by adding more support to the coils by filling the coil gaps by flexible insulation material, i.e. for example silicon.

According to embodiments of the invention, the circumferential gap may be variable along the axial direction.

A stator or rotor for an electrical machine including a plurality of N segments includes a plurality of N circumferential gaps, each circumferential gap being provided between two respective adjacent segments. According to the different embodiments of the present invention each circumferential gap may have the same shape and dimensions, both in the radial and in the axial directions, of any other circumferential gap or may be different, both in the radial or in the axial directions, from any other circumferential gap.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

- Figure 1: shows a schematic section of a wind turbine including an electrical generator with a stator geometry according to the present invention.
- Figure 2: shows a partial cross section of a first embodiment of an electrical generator in accordance with the present invention.
- Figure 3: shows a magnified view of details of the embodiment of figure 2.
- Figure 4: shows a partial cross section of a second embodiment of an electrical generator in accordance with the present invention.

### Detailed Description

The illustrations in the drawings are schematic. It is noted that in different figures, similar or identical elements are provided with the same reference signs.

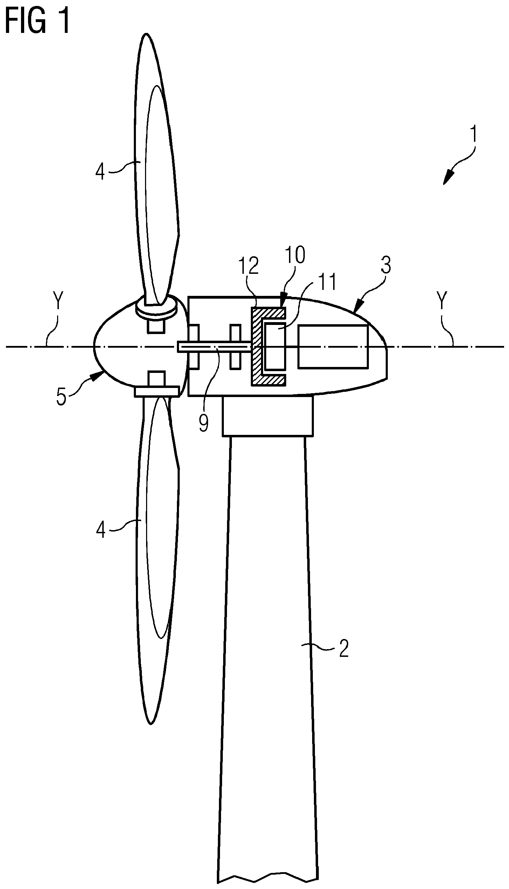

**Figure 1** shows a wind turbine 1 according to the invention. The wind turbine 1 comprises a tower 2, which is mounted on a non-depicted foundation. A nacelle 3 is arranged on top of the tower 2. The wind turbine 1 further comprises a wind rotor 5 having two, three or more blades 4 (in the perspective of Figure 1 only two blades 4 are visible). The wind rotor 5 is rotatable around a rotational axis Y. When not differently specified, the terms axial, radial and circumferential in the following are made with reference to the rotational axis Y. Rotational axis Y may coincide with stator longitudinal axis Y. The blades 4 extend radially with respect to the rotational axis Y. The wind turbine 1 comprises a concentrated winding electrical generator 10.
The wind rotor 5 is rotationally coupled with the electrical generator 10 by means of a rotatable main shaft 9. According to other possible embodiments of the present invention (not represented in the attached figures), the wind rotor 5 is rotationally coupled directly with the electrical generator 10 (direct-drive generator configuration). The permanent magnet electrical generator 10 includes a stator 11 and a rotor 12. The rotor 12 is radially external to the stator 11 and is rotatable with respect to the stator 11 about the rotational axis Y. According to other embodiments of the present invention (not shown) the rotor 12 is radially internal to the stator 11.

According to other possible embodiments of the present invention (not represented in the attached figures), the present invention can be applied to any electrical generator or motor which has concentrated winding topology, for example geared drive-trains or electrical machine of the synchronous or asynchronous types.

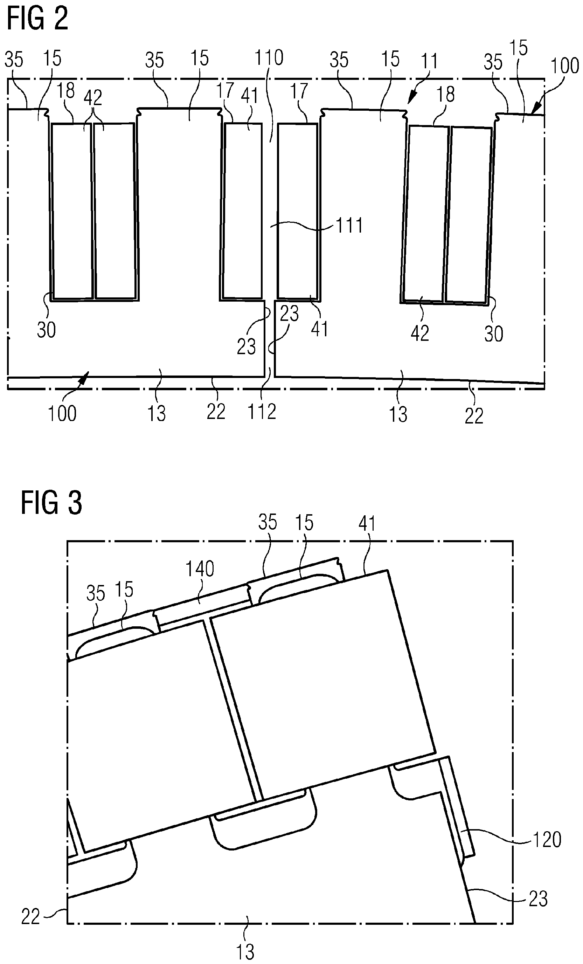

**Figures 2** and **3** show partial schematic views of a cross section, orthogonal to the rotational axis Y, of the electrical generator 10, where only the radially internal stator 11 is shown, the radial external rotor being not represented.

According to other possible embodiments of the present invention (not represented in the attached figures), the present invention and the description which follows may be applied to a rotor of an electrical machine.

The stator 11 includes a plurality of circumferential segments 100 (two segment 100 are shown in figure 2), which are circumferentially joined in such a way that a circumferential gap 110 is interposed between two circumferentially adjacent stator segments 100. The stator 11 has a toothed structure, as descried in the following, for housing a coil winding 30 arranged in each of the stator segments 100. Each segment 100 includes a segment body 22 circumferentially extending about the longitudinal axis Y between two circumferential ends 23. The segment body 22 includes a yoke 13, a plurality of teeth 15 and a plurality of slots 17, 18.

Each tooth 15 protrudes from the yoke 13 according to a radial direction orthogonal to the longitudinal axis Y up to respective tooth radial ends 35. The plurality of slots 17, 18 are circumferentially interposed between the teeth 15 and circumferentially distributed between two end slots 17. Each end slot 17 is circumferentially comprised between a respective tooth 15 and a respective circumferential end 23 of the segment body 22. The plurality of slots 17, 18 comprise a plurality of intermediate slots 18 (one complete intermediate slot 18 for each segment 100 are shown in figure 2) circumferentially comprised between the two end slots 17. The coil winding 30 is a double-layer winding including two side coil potions 41 respectively housed in the end slots 17 and two coils portions 42 in each of the intermediate slots 18. Each of the coil portions 41 and of the coil portions 42 extends radially from the yoke towards the radial external end of the respective slot 17, 18, i.e. towards the circumferential air gap 110.

According to possible embodiments of the present invention, the coil winding 30 may by a coil concentrated double-layer or single-layer winding or a double-layer or single-layer coil distributed winding.

The stator 11 includes at least one spacing element provided between two circumferentially adjacent segments 100 for preventing the coil windings 30 of two circumferentially adjacent segments 100 from contacting each other.

In the first embodiment of figure 2 and 3, the segment circumferential gap 110 includes a first portion 111 interposed between two circumferentially adjacent side coil portions 41 and a second portion 112 interposed between two circumferentially adjacent yokes 13, the first portion 111 having a larger circumferential extension than the second portion 112. The yoke 13 comprises at each respective circumferential end 23 a protrusion 120 circumferentially protruding with respect to the side coil portions 41 housed in the end slot 17 at the respective circumferential end 23. The protrusion 120 achieves the segment circumferential gap 110 having a variable circumferential extension and provides the spacing element between two circumferentially adjacent segments for preventing the coil windings 30 of the two circumferentially adjacent segments 100 from contacting each other.

According to other embodiments of the invention (not shown) other types of spacing element may be provided between the yokes 13 of two circumferentially adjacent segments 100 for preventing the coil windings 30 from contacting each other. For example, a spacing element may be provided, which is not integral with the yoke 13.

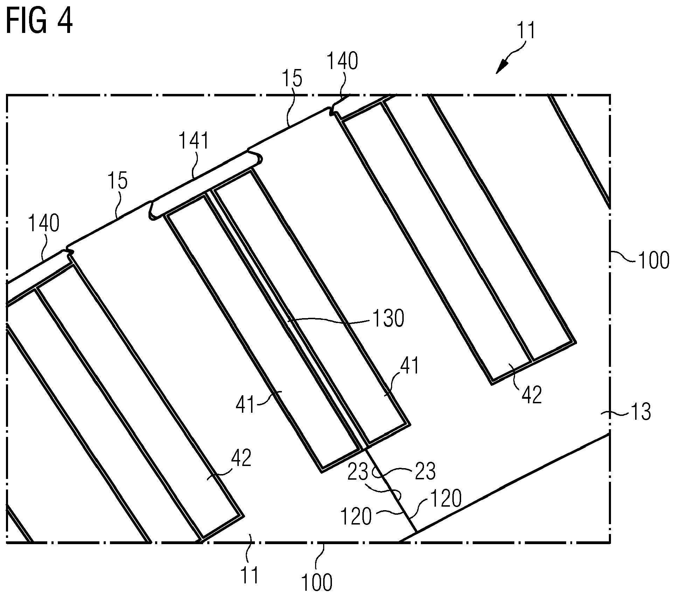

The stator 11 of the embodiment in figures 2 and 3 comprises a plurality of intermediate wedges 140, each intermediate wedge 140 being attached at two tooth radial ends 35 of two circumferentially adjacent teeth 15 for radially closing a respective intermediate slot 18. An additional end wedge 141 for radially closing two adjacent end slots 17 of two circumferentially adjacent segments 100 may be provided as described in the following with reference to the second embodiment of **figure 4****.**

The end wedge 141 radially closes two adjacent end slots 17, the circumferential extension of the intermediate slots 18. In embodiments (figures 2 to 4) where intermediate wedges are also provided, the circumferential extension of the intermediate wedge 140 is smaller than the circumferential extension of the end wedge 141. According to other embodiments of the invention (not shown), only the end wedges 141 are present. With reference to the second embodiment of figure 4, an end wedge 141 may be used in combination with protrusions 120 at the circumferential end 23 to provide a combined spacing effect at the yoke 13 and at the tooth radial ends 35. According to other embodiments of the invention (not shown), protrusions 120 at the circumferential end 23 of the yoke 13 are not present, the segment circumferential gap 110 having a constant circumferential extension and the spacing effect being provided by the end wedge 141. Each wedge 140, 141 may attached at two tooth radial ends 35 of two circumferentially adjacent teeth 15 by means of a pressure fit and/or by means of a glue.

As shown in the embodiment of figure 4, a separator 130 may be provided at the segment circumferential gap 110, the separator 130 being interposed between two respective side coil portions 41. The separator 130 further prevent the two respective side coil portions 41 from contacting each other. The separator 130 may be made of paper or of a deformable material, such as rubber or silicon. The separator 130 further enables to resist any mechanical relative sliding between the two respectively side coil portions 41, between which the separator 130 is interposed. A separator may be provided at the segment circumferential gap 110 of the embodiment of figures 2 and 3.

The above described embodiments refer to segment circumferential gap 110 in a plane transversal to the longitudinal axis Y. The shape of the circumferential gap 110 along the circumferential gap 110 may be constant or variable.

## Claims

1. Stator (11) or rotor for an electrical machine (10) including a plurality of segments (100), wherein each segment (100) includes:
- a segment body (22) circumferentially extending about a longitudinal axis (Y) of the segment (100) between two circumferential ends (23), the segment body (22) including:
- a plurality of teeth (15) protruding according to a radial direction orthogonal to the longitudinal axis (Y) from a yoke (13) of the segment body (22),
- a plurality of slots (17, 18), circumferentially interposed between the teeth (15), the plurality of slots (17, 18) being circumferentially distributed between two end slots (17), each end slot (17) being circumferentially comprised between a respective tooth (15) and a respective circumferential end (23), the plurality of slots (17, 18) comprising a plurality of intermediate slots (18) circumferentially comprised between the two end slots (17),
- each segment (100) further including a coil winding (30) arranged in the segment body (11), the coil winding (30) including at least two side coil portions (41) respectively housed in the end slots (17),
- wherein at least two segments (100) are circumferentially joined together at their ends (23) in such a way that a segment circumferential gap (110) is interposed between two circumferentially adjacent segments (100), and wherein the stator (11) or rotor includes at least one spacing element (120, 141) provided between two circumferentially adjacent segments (100) for preventing the coil windings (30) of two circumferentially adjacent segments (100) from contacting each other.

2. Stator (11) or rotor as claimed in claim 1, wherein the segment circumferential gap (110) includes a first portion (111) interposed between two circumferentially adjacent side coil portions (41) and a second portion interposed between two circumferentially adjacent yokes (13), the first portion (111) having a larger circumferential extension than the second portion (112).

3. Stator (11) or rotor as claimed in claim 2, wherein the yoke (13) comprises at least one respective circumferential end (23) a protrusion (120) circumferentially protruding with respect to the side coil portions (41) housed in the end slot (17) at the respective circumferential end (23).

4. Stator (11) or rotor as claimed in any of the previous claims, wherein stator or rotor comprises at least one end wedge (141) for radially closing two adjacent end slots (17) of two circumferentially adjacent segments (100), the end wedge (141) being circumferentially dimensioned for preventing the coil windings (30) of two circumferentially adjacent segments (100) from contacting each other.

5. Stator (11) or rotor as claimed in any of the previous claims, wherein a separator (130) is provided at the segment circumferential gap (110), the separator (130) being interposed between two respective side coil portions (41).

6. Stator (11) or rotor as claimed in any of the previous claims, wherein the separator (130) is made of electrical insulation paper.

7. Stator (11) or rotor as claimed in claim 3, wherein the separator (130) is made of a flexible material, such as rubber or silicon.

8. Stator (11) or rotor claimed in any of the previous claims, wherein the plurality of teeth (15) protrude according to a radial direction orthogonal to the longitudinal axis (Y) from the yoke (13) of the segment body (22) to respective tooth radial ends (35), the stator or rotor comprising a plurality of wedges (140, 141), each wedge (140, 141) being attached at two tooth radial ends (35) of two circumferentially adjacent teeth (15) for radially closing a respective slots (17, 18), the plurality of wedges (140, 141) comprising at least one intermediate wedge (140) for radially closing a respective intermediate slot (18) and at least one end wedge (141) for radially closing two adjacent end slots (17), the circumferential extension of the intermediate wedge (140) being smaller than the circumferential extension of the end wedge (141).

9. Stator (11) or rotor as claimed in claim 8, wherein each wedge (140, 141) is attached at two tooth radial ends (35) of two circumferentially adjacent teeth (15) by means of a pressure fit.

10. Stator (11) or rotor as claimed in claim 8 or 9, wherein each wedge (140, 141) is attached at two tooth radial ends (35) of two circumferentially adjacent teeth (15) by means of a glue.

11. Stator (11) or rotor claimed in any of the previous claims 1 to 10, wherein the segment circumferential gap (110) is variable in shape or dimensions along the longitudinal axis (Y).

12. Stator (11) or rotor claimed in any of the previous claims 1 to 10, wherein the segment circumferential gap (110) is constant in shape or dimensions along the longitudinal axis (Y).

13. A segment (100) for a stator (11) or rotor for an electrical machine (10), wherein the segment (100) includes:
- a segment body (22) circumferentially extending about a longitudinal axis (Y) of the segment (100) between two circumferential ends (23), the segment body (22) including:
- a plurality of teeth (15) protruding according to a radial direction orthogonal to the longitudinal axis (Y) from a yoke (13) of the segment body (22),
- a plurality of slots (17, 18), circumferentially interposed between the teeth (15) of the stator (11) or rotor, the plurality of slots (17, 18) being circumferentially distributed between two end slots (17), each end slot (17) being circumferentially comprised between a respective tooth (15) and a respective circumferential end (23), the plurality of slots (17, 18) comprising a plurality of intermediate slots (18) circumferentially comprised between the two end slots (17),
- a coil winding (30) arranged in the segment body (11), the coil winding (30) including at least two side coil portions (41) respectively housed in the end slots (17),
- wherein the yoke (13) comprises at least at one respective circumferential end (23) a protrusion (120) circumferentially protruding with respect to the side coil portion (41) housed in the end slot (17) at the respective circumferential end (23) .

14. Electrical machine (10) including a stator (11) or rotor as claimed in any of the previous claims 1 to 12.

15. Wind turbine (1) including an electrical generator (10) including a stator (11) or rotor as claimed in any of the previous claims 1 to 12.
